# EUROPEAN PATENT SPECIFICATION

(11) **EP 3 421 963 B1**
(45) Date of publication and mention of the grant of the patent: **07.04.2021**
(21) Application number: 18180432.9
(22) Date of filing: 28.06.2018
(51) Int. Cl.: G01M 3/32, B65D 90/50

(54) **METHOD AND SYSTEMS FOR A VESSEL LEAKAGE TIGHTNESS TEST**
VERFAHREN UND SYSTEME FÜR EINE BEHÄLTERLECKDICHTHEITSPRÜFUNG
PROCÉDÉ ET SYSTÈMES POUR UN TEST D'ÉTANCHÉITÉ DE FUITE DE RÉCIPIENTS

(30) Priority: 30.06.2017 FR 1756086
(43) Date of publication of application: 02.01.2019
(73) Proprietor: General Electric Company, Schenectady, NY 12345 (US)
(72) Inventor: GOEBEL, Stephan Joerg, 68309 Mannheim (DE); JACOULOT, Pascal Lucien, 90018 Belfort (FR); VISINTIN, Massimiliano, 5401 Baden (CH); KAHRAMAN, Oktay, 90000 Belfort (FR)
(74) Representative: BRP Renaud & Partner mbB Rechtsanwälte Patentanwälte Steuerberater

(56) References cited:
- WO-A1-2016/107993
- JP-A- 2017 075 842

## Description

### BACKGROUND

The field of the disclosure relates generally to containment vessels and, more particularly, to a method and system for verifying leak tightness of a containment vessel boundary.

At least some known hydrogen or hydrogen and water cooled generators are maintained to be gas tight to prevent uncontrolled loss of hydrogen to ambient. During outages, the generator casing and/or stator cooling water cycle is checked to avoid hydrogen leaks when the generator is brought back online.

Known leak test procedures include filling the containment vessel to be tested, such as, but not limited to the hydrogen cooled generator, with a testing fluid, for example, a gas, such as air or nitrogen (N₂) or a liquid such as water. After reaching a predetermined test pressure, the filling is stopped and the hydrogen cooled generator system is permitted to stabilize, however the testing gas pressure may oscillate due to temperatures in the system stabilizing over time, and may only reach an equilibrium value after several hours. The testing phase is started after a suitable equilibrium is reached, typically by determining that the internal pressure level has been stabilize for a period of time. During the testing phase, various temperatures and pressures are recorded and an algorithm is used to determine a system leakage rate. In various instances, the duration of stabilization of the system parameters is between approximately three and twenty-four hours and the entire test duration is therefore greater than twenty-four hours. Checking the generator and associated piping for leakage typically lies on the critical path of maintenance activities during the outage. Accordingly, any time that is able to be eliminated from the testing procedure directly impacts the length of the outage.
JP 2017 075842 A describes a reference container and a leak test method for inspecting various measurement objects with a reference container. The reference container has an inner space and can be connected to the air leak tester. The reference container also has a material that covers the container and has a lower thermal conductivity than the container to be tested. The cover is formed and can change the covering area.

WO 2016/107993 A1 concerns a device for verifying the leak tightness of an enclosure under a determined pressure, connected in a leak-tight manner to a closed measurement volume arranged within said device. Said device comprises a processing module and a pressure sensor transmitting a signal, representative of the pressure in the enclosure, to the processing module. The verification device further comprises a precision module interacting with the electronic processing module in such a way as to eliminate the effect of temperature variations in the surrounding environment during execution of processing operations of at least said signal representative of the pressure in the enclosure and detection of a leak in the enclosure.

### BRIEF DESCRIPTION

In one embodiment, a leakage tightness testing system for checking a tightness of a test vessel having a test vessel internal volume and a test vessel thermal inertia characteristic includes an external reference vessel coupled in flow communication to the test vessel. The external reference vessel includes an external reference vessel volume that includes an insulative material layer at least partially covering the external reference vessel. The insulative material layer is configured to approximately match a thermal inertia characteristic of the external reference vessel to the thermal inertia characteristic of the test vessel. The leakage tightness testing system also includes a leakage testing device coupled in flow communication to the test vessel and the external reference vessel. The leakage testing device includes a leakage sensor. The external reference vessel is coupled in flow communication with a first inlet port of a differential pressure sensor, and said test vessel is coupled in flow communication with a second inlet port of the differential pressure sensor. The test vessel comprises at least one pressure sensor and at least one temperature sensor. The external reference vessel comprises at least one pressure sensor and at least one temperature sensor.

In another embodiment, a method of performing a leakage tightness test of a test vessel includes coupling an external reference vessel in flow communication with the test vessel and charging the test vessel and external reference vessel, with a test gas, to a predetermined initial test pressure during a filling phase of the leakage tightness test. The method also includes monitoring a pressure of at least one of the test vessel and the external reference vessel for a stabilization of the test pressure and beginning the leakage tightness test of the test vessel when the monitored pressure is stable within a predetermined pressure range. The method also includes monitoring a differential pressure between the test vessel and the external reference vessel during a testing phase. The method further comprises monitoring the pressure values and the temperature values within the test vessel and within the external reference vessel.

### BRIEF DESCRIPTION OF THE DRAWINGS

FIGS. 1-4 show example embodiments of the method and systems described herein.
FIG. 1 is a side cutaway view of a test vessel, such as, but not limited to a hydrogen and/or water cooled electrical generator.
FIG. 2 is a schematic diagram of a leakage tightness testing system that may be used with test vessel.
FIG. 3 is a schematic view of a leakage test configuration including a side elevation view of the external reference vessel.
FIG. 4 is a graph of pressure versus time during a leak test of test vessel in accordance with an example embodiment of the present disclosure.

Although specific features of various embodiments may be shown in some drawings and not in others, this is for convenience only. Any feature of any drawing may be referenced and/or claimed in combination with any feature of any other drawing.

Unless otherwise indicated, the drawings provided herein are meant to illustrate features of embodiments of the disclosure. These features are believed to be applicable in a wide variety of systems includes one or more embodiments of the disclosure. As such, the drawings are not meant to include all conventional features known by those of ordinary skill in the art to be required for the practice of the embodiments disclosed herein.

### DETAILED DESCRIPTION

The following detailed description illustrates embodiments of the disclosure by way of example and not by way of limitation. It is contemplated that the disclosure has general application to analytical and methodical embodiments of testing leakage in vessels in industrial and commercial applications.

Embodiments of a leakage tightness testing method and system that uses a relatively large external reference vessel than is used in the current art are described herein. A leakage tightness test is a procedure performed to verify an integrity of a pressure boundary. The leakage tightness testing of a large pressure vessel, also referred to herein as a "test vessel," such as a utility electrical generator, is influenced by ambient parameters like temperature and atmospheric pressure. The test for tightness uses test equipment including a leakage sensor, such as, but not limited to a pressure measurement device, a differential pressure sensor, a flow measurement device, and the like. As used herein, the leakage sensor refers to any sensor or suite of sensors configured to detect a leakage of the pressurized fluid from the leakage tightness testing system. Other test equipment used during the leakage tightness test may include valves, temperature sensors, pressure sensors, and an external reference vessel. After pressurization of the test vessel and the external reference vessel, the pressures in both vessels will stabilize after a period of time. After the pressures in both vessels maintain steady state values, monitoring of the test equipment is started. Any change of ambient temperature surrounding the test vessel and the external reference vessel has an impact on the pressure inside of the vessels. The smaller a volume of the vessel, the faster is the impact. The external reference vessel has a smaller thermal capacity than the test vessel, so the pressure inside external reference vessel changes more rapidly than the pressure in the test vessel. Because of the different time constants for the reaction of the pressure changes in the test vessel and the external reference vessel and the goal to test the test vessel in as short a period of time as possible, the measurement results could show false results, leading to discarding the measurement. In order to avoid or to mitigate the thermal impact on the external reference vessel, the external reference vessel is insulated to match the thermal behavior of the test vessel. Therefore, the thermal behavior of the test vessel to a change of internal temperature of the test vessel is similar to the thermal behavior of the external reference vessel to a change in its internal temperature. By insulating the external reference vessel, the thermal inertia of the test vessel and the external reference vessel can be made comparable. The influence of ambient temperature on both the test vessel and the external reference vessel on the inner temperature and pressure of both vessels are made similar. Thus, eliminating or mitigating the ambient temperature influence, which can reduce the testing time.

The following description refers to the accompanying drawings, in which, in the absence of a contrary representation, the same numbers in different drawings represent similar elements.

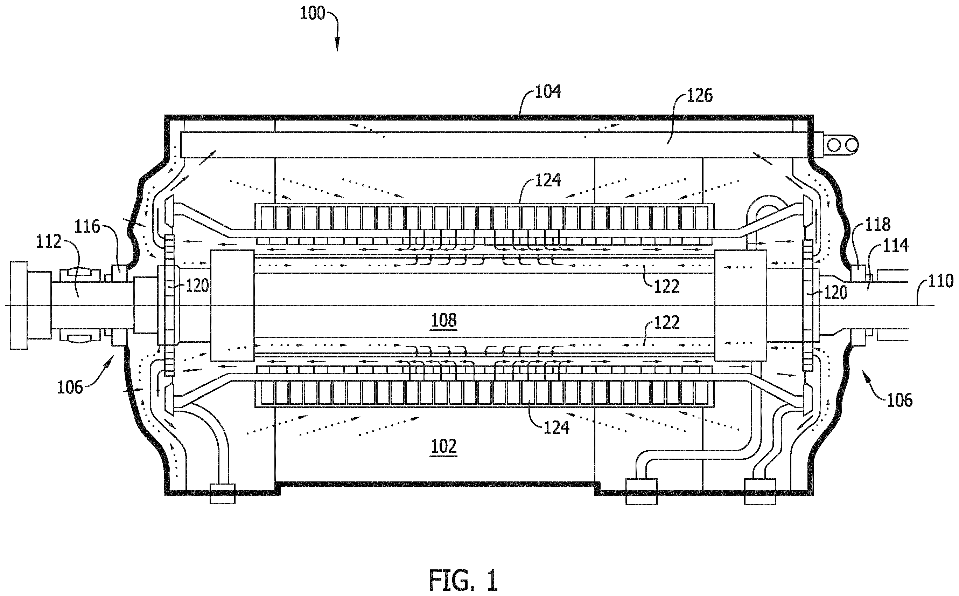

FIG. 1 is a side cutaway view of a test vessel 100, such as, but not limited to a hydrogen and/or water-cooled electrical generator. In the example embodiment, test vessel 100 includes a test vessel volume 102 enclosed in a generator casing 104. In various embodiments, test vessel 100 includes penetrations 106 through generator casing 104. For example, test vessel 100 may include a rotatable member 108 such as, an electrical field rotor, rotatable about an axis of rotation 110. In the example embodiment, rotatable member 108 includes a first stub shaft 112 that extends through generator casing 104 and may also include a second stub shaft 114 that extends through generator casing 104 in a different location. Each of first stub shaft 112 and second stub shaft 114 are provided with respective seals 116 and 118 configured to facilitate maintaining a tightness of test vessel 100. One or more centrifugal fans 120 are positioned on and co-rotate with rotatable member 108. One or more centrifugal fans 120 drive a flow of hydrogen through test vessel 100 when rotatable member 108 is rotating, such as, during operation of test vessel 100. Rotatable member 108 includes a plurality of cooling passages 122, which direct a flow of a first cooling fluid through rotatable member 108, such as, through a core and/or windings of rotatable member 108. A first heat exchanger 124 coupled to rotatable member 108 receives the flow of cooling fluid and at least a portion of the flow of hydrogen to transfer heat generated in rotatable member 108 to the flow of hydrogen. A second heat exchanger 126 coupled an interior of generator casing 104 is configured to receive the flow of hydrogen and a flow of a second cooling fluid to transfer heat from the flow of hydrogen to the flow of the second cooling fluid.

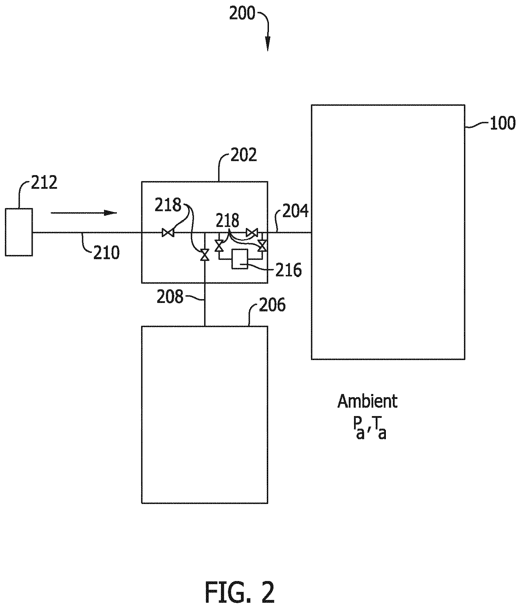

FIG. 2 is a schematic diagram of a leakage tightness testing system 200 that may be used with test vessel 100. In the example embodiment, test vessel 100 is coupled in flow communication with a leakage testing device 202 through a first conduit 204. Leakage testing device 202 is also coupled in flow communication with an external reference vessel 206 through a second conduit 208. A third conduit 210 supplies leakage testing device 202 with a flow of test fluid 212, which in various embodiments, comprises air, nitrogen, or other gas capable of performing the functions described herein. In the example embodiment, leakage testing device 202 is self-contained. In various embodiments, leakage testing device 202 includes a leakage sensor 216, such as, but not limited to a differential pressure sensor, one or more pressure sensors, a flow sensor, and the like. Leakage testing device 202 also includes a plurality of valves 218 positionable to permit controlling a flow through leakage testing device 202 and to permit an isolation of test vessel 100, external reference vessel 206, leakage sensor 216, and test fluid 212.

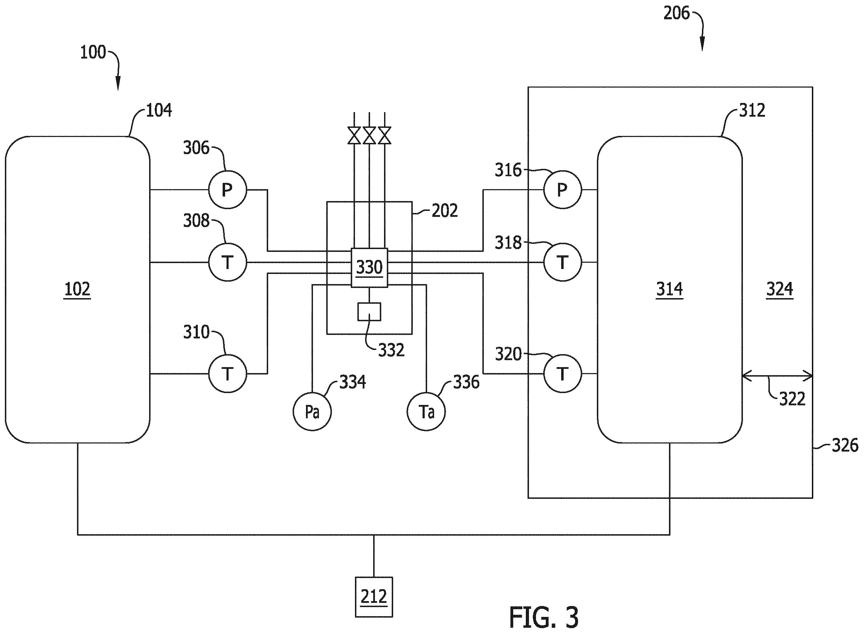

FIG. 3 is a schematic view of a leakage test configuration including a side elevation view of external reference vessel 206. In the example embodiment, test vessel 100 includes test vessel volume 102 surrounded by generator casing 104. A first pressure sensor 306, a first temperature sensor 308 and a second temperature sensor 310 sense respective process parameters within generator casing 104. Outputs of first pressure sensor 306, first temperature sensor 308 and second temperature sensor 310 are transmitted to leakage testing device 202. External reference vessel 206 includes a shell 312 configured to contain a predetermined internal volume 314 of test fluid 212. Test fluid 212 within shell 312 initially is set to an initial test pressure Pi and an initial test temperature Ti, which are sensed using a pressure sensor 316, a first temperature sensor 318 and a second temperature sensor 320. External reference vessel 206 also includes an insulative material 324 having a thickness 322. In various embodiments, insulative material 324 is embodied as a foam applied between an outer casing 326 and shell 312. Insulative material 324 is embodied in any of a plurality of insulative media capable of performing the functions described herein. Accordingly, insulative material 324 may be embodied in various forms including for example, but not limited to layers, batts of insulation, insulation blankets, gases having insulative properties, phase change materials, and the like.

In the example embodiment, the insulative qualities of insulative material 324 facilitate making external reference vessel 206 a better reference for pressure decay testing of test vessel 100. For example, insulative material 324 is configured to permit external reference vessel 206 to approximate a similar thermal behavior as test vessel 100. As used herein, thickness 322 may refer to a physical dimension of insulative material 324 or may refer to a thermal dimension of insulative material 324 wherein the thermal dimension relates to a thermal conductivity of insulative material 324 and may include a thermal storage capability of insulative material 324. Additionally, external reference vessel 206 is of a greater volume than typical reference vessels. In one embodiment, internal volume 314 of external reference vessel 206 is approximately one-twentieth the internal volume 304 of test vessel 100. In another embodiment, internal volume 314 of external reference vessel 206 is approximately one-tenth the internal volume 304 of test vessel 100. In still another embodiment, internal volume 314 of external reference vessel 206 is approximately one-fifth the internal volume 304 of test vessel 100.

In the example embodiment, leakage testing device 202 includes a computing device or processor 330 coupled to a memory device 332. Processor 330 may receive inputs from for example, first pressure sensor 316, first temperature sensor 318, second temperature sensor 320, an ambient pressure sensor 334, and/or an ambient temperature sensor 336. Processor 330 may generate output to control various valves 218 in leakage tightness testing system 200 configured to, for example, isolate test vessel 100, external reference vessel 206, leakage sensor 216, and test fluid 212. Any of valves 218 may controlled by modulating its position between fully open and fully closed using any of the parameters received by leakage tightness testing system 200 including parameters stored in memory device 332, such as, in a look-up table or model of leakage testing device 202, external reference vessel 206, and test vessel 100.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the term "computer" and related terms, e.g., "computing device", are not limited to integrated circuits referred to in the art as a computer, but broadly refers to a microcontroller, a microcomputer, a programmable logic controller (PLC), an application specific integrated circuit, and other programmable circuits, and these terms are used interchangeably herein.

As used herein, the terms "software" and "firmware" are interchangeable, and include any computer program stored in a memory device for execution by mobile devices, clusters, personal computers, workstations, clients, servers, and processor 330 wherein the memory includes random access memory (RAM) memory, read only memory (ROM) memory, erasable programmable read-only memory (EPROM) memory, electrically erasable programmable read-only memory (EEPROM) memory, and non-volatile RAM (NVRAM) memory. The above memory types are examples only, and are thus not limiting as to the types of memory usable for storage of a computer program.

Memory device 332 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are examples only, and are thus not limiting as to the types of memory usable for storage of a computer program and data.

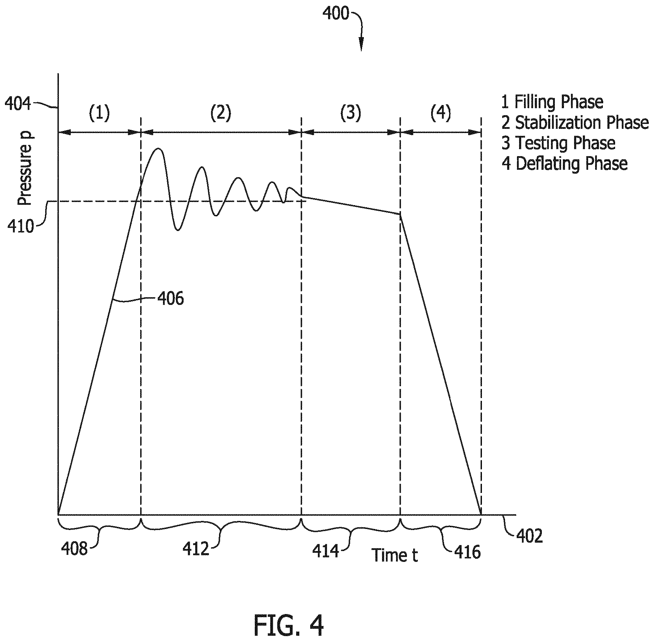

FIG. 4 is a graph 400 of pressure versus time during a leak test of test vessel 100 in accordance with an example embodiment of the present disclosure. In the example embodiment, graph 400 includes an x-axis 402 graduated to units of time and a y-axis 404 graduated in units of test pressure. A first trace 406 represents pressure versus time during a leak test. During preparation for the leak test, components of leakage tightness testing system 200 is installed on test vessel 100 by connecting test fluid 212, leakage testing device 202, and external reference vessel 206 to test vessel 100. During a filling phase 408 the filling of test vessel 100 through generator casing 104 is performed either manually or under control of leakage testing device 202. The filling is controlled to minimize instabilities in the pressure and temperature of external reference vessel 206. A timed ramp-up to a predetermined test pressure 410 maintains relatively small pressure swings. Overshoots above and below predetermined test pressure 410 may occur while attempting to increase and maintain pressure within leakage testing device 202, external reference vessel 206, and test vessel 100 at predetermined test pressure 410. Additionally, test fluid 212 may be heated or cooled prior to delivery to leakage tightness testing system 200 to also minimize instabilities due to expansion and/or contraction of test fluid 212 while reaching approximately equilibrium values before testing can begin. During a stabilization phase 412 the filling is stopped after the pressure monitored by leakage testing device 202 reaches the predetermined test pressure and the stabilization in the reference volume starts. When predetermined test pressure 410 is stable within a predetermined range for a predetermined duration within leakage testing device 202, external reference vessel 206, and test vessel 100, stabilization phase 412 ends. A testing phase 414 includes monitoring and recording monitoring a differential pressure between the test vessel and the external reference vessel, a flow rate into the test vessel, and/or a pressure within at least one of the test vessel and the external reference vessel. Other pressure and temperature values within leakage testing device 202, external reference vessel 206, test vessel 100, and from ambient by leakage testing device 202 may also be monitored and/or recoded. In one embodiment, leakage sensor 216 is embodied in a differential pressure sensor. In such case, external reference vessel 206 is coupled in flow communication with a first inlet port of the differential pressure sensor and test vessel 100 is coupled in flow communication with a second inlet port of the differential pressure sensor. Leakage testing device 202 compares the pressures inside test vessel 100 and external reference vessel 206 and calculates the leakage of test vessel 100 and external reference vessel 206 in relation to the temperatures inside test vessel 100 and external reference vessel 206 and ambient temperature. After the predetermined duration, leakage testing device 202 stops the test and shows the result for leakage either as a value of leakage rate or differential pressure. During a deflating phase 416, test fluid 212 is released by leakage testing device 202 or manually. When leakage testing device 202, and external reference vessel 206, and test vessel 100 are equalized with ambient pressure, leakage testing device 202, and external reference vessel 206 are disassembled from test vessel 100.

In one embodiment, the pressure drop in, for example, mm Hg during the test duration may be determined using equations and/or algorithms programmed for use by processor 330. The pressure decay within leakage tightness testing system 200 over time is related to the leakage from test vessel 100. In one embodiment, a verification that insulative material 324 provides approximately the same thermal inertia characteristic to shell 312 of test vessel 100 is performed. If not, insulative material 324 may be changed to another material, or thickness 322 may be adjusted until the thermal inertia characteristic of external reference vessel 206 approximates the thermal inertia characteristic of test vessel 100. In one embodiment, the pressure drop in mm Hg during the test duration is determined from a difference between an initial gauge pressure of leakage tightness testing system 200 and the final gauge pressure of leakage tightness testing system 200, a difference between an initial barometric pressure proximate leakage tightness testing system 200 and the final barometric pressure proximate leakage tightness testing system 200 corrected for a change in average gas temperature of proximate leakage tightness testing system 200 during the test.

The above-described leakage tightness testing system provides an efficient method for determining a leakage in a test vessel, such as, but not limited to an electrical generator casing. Specifically, the above-described leakage tightness testing system includes an external reference vessel that is sized and insulated to approximately match the thermal behavior of the test vessel. This matching provides an ability to stabilize the pressures and temperatures in the test vessel and leakage tightness testing system faster than previously possible.

As will be appreciated based on the foregoing specification, the above-discussed embodiments of the disclosure may be implemented using computer programming or engineering techniques including computer software, firmware, hardware or any combination or subset thereof. Any such resulting program, having computer-readable and/or computer-executable instructions, may be embodied or provided within one or more computer-readable media, thereby making a computer program product, i.e., an article of manufacture, according to the discussed embodiments of the disclosure. The computer readable media may be, for instance, a fixed (hard) drive, diskette, optical disk, magnetic tape, semiconductor memory such as read-only memory (ROM) or flash memory, etc., or any transmitting/receiving medium such as the Internet or other communication network or link. The article of manufacture containing the computer code may be made and/or used by executing the instructions directly from one medium, by copying the code from one medium to another medium, or by transmitting the code over a network. The technical effect of the methods and systems may be achieved by performing at least one of the following steps: (a) coupling an external reference vessel in flow communication with the test vessel, a volume of the external reference vessel being greater than one-twentieth the volume of the test vessel, (b) charging the test vessel, and external reference vessel, with a test gas to a predetermined initial test pressure during a filling phase of the leakage tightness test, (c) monitoring a pressure of at least one of the test vessel and the external reference vessel for a stabilization of the pressure, and (e) beginning the leakage tightness test of the test vessel when the monitored pressure is stable within a predetermined pressure range.

The above-described embodiments of a method and system of leakage tightness testing provide a cost-effective and reliable means for providing determining a tightness of a pressure vessel. More specifically, the methods and systems described herein facilitate reducing a time to stabilization of the leakage tightness testing system, which directly impacts the length of the leakage tightness test. As a result, the methods and systems described herein facilitate reducing the time it takes to perform the leakage tightness test in a cost-effective and reliable manner.

Exemplary embodiments of leakage tightness testing systems are described above in detail. The leakage tightness testing systems, and methods of operating such systems and component devices are not limited to the specific embodiments described herein, but rather, components of the systems and/or steps of the methods may be utilized independently and separately from other components and/or steps described herein. For example, the methods may also be used in combination with other systems using an insulated and relatively larger volume external reference vessel, and are not limited to practice with only the systems and methods as described herein. Rather, the exemplary embodiment can be implemented and utilized in connection with many other pressure vessel applications and other non-pressure vessel applications.

## Claims

1. A leakage tightness testing system (200) for checking a tightness of a test vessel (100) having a test vessel internal volume (102,304) and a test vessel thermal inertia characteristic, said leakage tightness testing system (200) comprising:
an external reference vessel (206) coupled in flow communication to said test vessel (100), said external reference vessel (206) comprising an external reference vessel volume, said external reference vessel (206) comprising an insulative material layer at least partially covering said external reference vessel (206), said insulative material layer configured to approximately match a thermal inertia characteristic of said external reference vessel (206) to the thermal inertia characteristic of the test vessel (100); and
a leakage testing device (202) coupled in flow communication to said test vessel (100) and said external reference vessel (206), said leakage testing device (202) comprising a leakage sensor (216),
wherein said external reference vessel (206) is coupled in flow communication with a first inlet port of a differential pressure sensor, and said test vessel (100) is coupled in flow communication with a second inlet port of the differential pressure sensor,
**characterized in that** said test vessel (100) comprises at least one pressure sensor (306) and at least one temperature sensor (308,310); and
said external reference vessel (206) comprises at least one pressure sensor (316) and at least one temperature sensor (318,320), wherein the at least one pressure sensor and the at least one temperature sensor of the test vessel, and the at least one pressure sensor and the at least one temperature sensor of the reference vessel are connected to the leakage testing device (202).

2. The leakage tightness testing system (200) of Claim 1, wherein said external reference vessel volume is sized to be greater than approximately one-twentieth of the test vessel internal volume (102,304).

3. The leakage tightness testing system (200) of Claim 1, wherein said leakage sensor (216) and said external reference vessel (206) are coupled in flow communication.

4. The leakage tightness testing system (200) of Claim 1, wherein said insulative material layer comprises at least one of batts of insulation, insulation blankets, gases having insulative properties, and phase change materials.

5. The leakage tightness testing system of claim 1, wherein said insulative material layer comprises a thickness selectable to match a thermal inertia characteristic of said external reference vessel volume to a thermal inertia characteristic of said test vessel.

6. A method of performing a leakage tightness test of a test vessel (100), said method comprising:
coupling an external reference vessel (206) in flow communication with the test vessel (100);
charging the test vessel (100) and external reference vessel (206), with a test gas, to a predetermined initial test pressure during a filling phase of the leakage tightness test;
monitoring a pressure of at least one of the test vessel (100) and the external reference vessel (206) for a stabilization of the test pressure;
beginning the leakage tightness test of the test vessel (100) when the monitored pressure is stable within a predetermined pressure range; and
monitoring a differential pressure between the test vessel and the external reference vessel during a testing phase,
**characterized in that** the method further comprises monitoring the pressure values and the temperature values within the test vessel (100) and within the external reference vessel (206).

7. The method of Claim 6, wherein coupling an external reference vessel (206) in flow communication with the test vessel (100) comprises coupling an external reference vessel (206) in flow communication with the test vessel (100), a volume (314) of the external reference vessel (206) is greater than one-tenth the volume (102,304)
of the test vessel (100).

8. The method of Claim 6, wherein coupling an external reference vessel (206) in flow communication with the test vessel (100) comprises coupling an external reference vessel (206) in flow communication with the test vessel (100), a volume (314) of the external reference vessel (206) is greater than one-fifth the volume (102,304) of the test vessel (100).

9. The method of Claim 6, wherein coupling an external reference vessel (206) in flow communication with the test vessel (100) comprises coupling an external reference vessel (206) in flow communication with the test vessel (100), a volume (314) of the external reference vessel (206) is approximately equal to a volume (102,304) of the test vessel (100).

10. The method of Claim 6, wherein coupling an external reference vessel (206) in flow communication with the test vessel (100) comprises coupling an external reference vessel (206) that includes an insulative material layer (324) that gives the external reference vessel (206) a thermal inertia characteristic approximately equal to a thermal inertia characteristic of the test vessel (100).

## Patentansprüche

1. Leckdichtheitsprüfsystem (200) zum Prüfen einer Dichtheit eines Prüfbehälters (100) mit einem Prüfbehälterinnenvolumen (102, 304) und eines thermischen Trägheitsmerkmals des Prüfbehälters, wobei das Leckdichtheitsprüfsystem (200) Folgendes umfasst:
einen externen Referenzbehälter (206), der in Strömungsverbindung mit dem Prüfbehälter (100) gekoppelt ist, wobei der externe Referenzbehälter (206) ein externes Referenzbehältervolumen umfasst, wobei der externe Referenzbehälter (206) eine Isoliermaterialschicht umfasst, die den externe Referenzbehälter (206) zumindest teilweise bedeckt, wobei die Isoliermaterialschicht ausgestaltet ist, ein thermisches Trägheitsmerkmal des externen Referenzbehälters (206) ungefähr an das thermische Trägheitsmerkmal des Prüfbehälters (100) anzupassen; und
eine Leckprüfvorrichtung (202), die in Strömungsverbindung mit dem Prüfbehälter (100) und dem externen Referenzbehälter (206) gekoppelt ist, wobei die Leckprüfvorrichtung (202) einen Lecksensor (216) umfasst,
wobei der externe Referenzbehälter (206) in Strömungsverbindung mit einem ersten Einlassanschluss eines Differenzdrucksensors gekoppelt ist und der Prüfbehälter (100) in Strömungsverbindung mit einem zweiten Einlassanschluss des Differenzdrucksensors gekoppelt ist,
**dadurch gekennzeichnet, dass** der Prüfbehälter (100) mindestens einen Drucksensor (306) und mindestens einen Temperatursensor (308, 310) umfasst; und
der externe Referenzbehälter (206) mindestens einen Drucksensor (316) und mindestens einen Temperatursensor (318, 320) umfasst, wobei der mindestens eine Drucksensor und der mindestens eine Temperatursensor des Prüfbehälters und der mindestens eine Drucksensor und der mindestens eine Temperatursensor des Referenzbehälters mit der Leckprüfvorrichtung (202) verbunden sind.

2. Leckdichtheitsprüfsystem (200) nach Anspruch 1, wobei das externe Referenzbehältervolumen so bemessen ist, dass es größer als ungefähr ein Zwanzigstel des Prüfbehälterinnenvolumens (102, 304) ist.

3. Leckdichtheitsprüfsystem (200) nach Anspruch 1, wobei der Lecksensor (216) und der externe Referenzbehälter (206) in Strömungsverbindung gekoppelt sind.

4. Leckdichtheitsprüfsystem (200) nach Anspruch 1, wobei die Isoliermaterialschicht mindestens eines von Dämmvlieszuschnitten, Dämmmatten, Gasen mit Isoliereigenschaften und Phasenwechselmaterialien umfasst.

5. Leckdichtheitsprüfsystem nach Anspruch 1, wobei die Isoliermaterialschicht eine Dicke umfasst, die wählbar ist, um ein thermisches Trägheitsmerkmal des externen Referenzbehältervolumens an ein thermisches Trägheitsmerkmal des Prüfbehälters anzupassen.

6. Verfahren zum Durchführen einer Leckdichtheitsprüfung eines Prüfbehälters (100), wobei das Verfahren Folgendes umfasst:
Koppeln eines externen Referenzbehälters (206) in Strömungsverbindung mit dem Prüfbehälter (100);
Füllen des Prüfbehälters (100) und des externen Referenzbehälters (206) mit einem Prüfgas auf einen vorbestimmten Ausgangsprüfdruck während einer Füllphase der Leckdichtheitsprüfung;
Überwachen eines Drucks des Prüfbehälters (100) und/oder des externen Referenzbehälters (206) auf eine Stabilisierung des Prüfdrucks;
Beginnen der Leckdichtheitsprüfung des Prüfbehälters (100), wenn der überwachte Druck innerhalb eines vorbestimmten Druckbereichs stabil ist; und
Überwachen eines Differenzdrucks zwischen dem Prüfbehälter und dem externen Referenzbehälter während einer Prüfphase,
**dadurch gekennzeichnet, dass** das Verfahren ferner das Überwachen der Druckwerte und der Temperaturwerte innerhalb des Prüfbehälters (100) und innerhalb des externen Referenzbehälters (206) umfasst.

7. Verfahren nach Anspruch 6, wobei das Koppeln eines externen Referenzbehälters (206) in Strömungsverbindung mit dem Prüfbehälter (100) das Koppeln eines externen Referenzbehälters (206) in Strömungsverbindung mit dem Prüfbehälter (100) umfasst, wobei ein Volumen (314) des externen Referenzbehälters (206) größer als ein Zehntel des Volumens (102, 304) des Prüfbehälters (100) ist.

8. Verfahren nach Anspruch 6, wobei das Koppeln eines externen Referenzbehälters (206) in Strömungsverbindung mit dem Prüfbehälter (100) das Koppeln eines externen Referenzbehälters (206) in Strömungsverbindung mit dem Prüfbehälter (100) umfasst, wobei ein Volumen (314) des externen Referenzbehälters (206) größer als ein Fünftel des Volumens (102, 304) des Prüfbehälters (100) ist.

9. Verfahren nach Anspruch 6, wobei das Koppeln eines externen Referenzbehälters (206) in Strömungsverbindung mit dem Prüfbehälter (100) das Koppeln eines externen Referenzbehälters (206) in Strömungsverbindung mit dem Prüfbehälter (100) umfasst, wobei ein Volumen (314) des externen Referenzbehälters (206) ungefähr gleich einem Volumen (102, 304) des Prüfbehälters (100) ist.

10. Verfahren nach Anspruch 6, wobei das Koppeln eines externen Referenzbehälters (206) in Strömungsverbindung mit dem Prüfbehälter (100) das Koppeln eines externen Referenzbehälters (206) umfasst, der eine Isoliermaterialschicht (324) einschließt, die dem externen Referenzbehälter (206) ein thermisches Trägheitsmerkmal verleiht, das ungefähr gleich einem thermischen Trägheitsmerkmal des Prüfbehälters (100) ist.

## Revendications

1. Système de test d'étanchéité aux fuites (200) pour vérifier une étanchéité d'un récipient de test (100) présentant un volume interne de récipient de test (102, 304) et une caractéristique d'inertie thermique de récipient de test, ledit système de test d'étanchéité aux fuites (200) comprenant :
un récipient de référence externe (206) raccordé en communication fluidique avec ledit récipient de test (100), ledit récipient de référence externe (206) comprenant un volume de récipient de référence externe, ledit récipient de référence externe (206) comprenant une couche de matériau isolant recouvrant au moins partiellement ledit récipient de référence externe (206), ladite couche de matériau isolant étant configurée pour faire correspondre approximativement une caractéristique d'inertie thermique dudit récipient de référence externe (206) à la caractéristique d'inertie thermique du récipient de test (100) ; et
un dispositif de test de fuites (202) couplé en communication fluidique audit récipient de test (100) et audit récipient de référence externe (206), ledit dispositif de test de fuite (202) comprenant un capteur de fuites (216),
dans lequel ledit récipient de référence externe (206) est couplé en communication fluidique avec un premier orifice d'entrée d'un capteur de pression différentielle, et ledit récipient de test (100) est couplé en communication fluidique avec un second orifice d'entrée du capteur de pression différentielle,
**caractérisé en ce que** ledit récipient de test (100) comprend au moins un capteur de pression (306) et au moins un capteur de température (308, 310) ; et
ledit récipient de référence externe (206) comprend au moins un capteur de pression (316) et au moins un capteur de température (318, 320), dans lequel ledit au moins un capteur de pression et ledit au moins un capteur de température du récipient de test, et l'au moins un capteur de pression et l'au moins un capteur de température du récipient de référence sont connectés au dispositif de test de fuite (202).

2. Système de test d'étanchéité aux fuites (200) selon la revendication 1, dans lequel ledit volume de récipient de référence externe est dimensionné pour être supérieur à approximativement un vingtième du volume interne du récipient de test (102, 304).

3. Système de test d'étanchéité aux fuites (200) selon la revendication 1, dans lequel ledit capteur de fuite (216) et ledit récipient de référence externe (206) sont couplés en communication fluidique.

4. Système de test d'étanchéité aux fuites (200) selon la revendication 1, dans lequel ladite couche de matériau isolant comprend au moins l'un parmi des liteaux d'isolation, des matelas isolants, des gaz ayant des propriétés isolantes et des matériaux à changement de phase.

5. Système de test d'étanchéité aux fuites selon la revendication 1, dans lequel ladite couche de matériau isolant comprend une épaisseur sélectionnable pour faire correspondre une caractéristique d'inertie thermique dudit volume de récipient de référence externe à une caractéristique d'inertie thermique dudit récipient de test.

6. Procédé de réalisation d'un test d'étanchéité de fuite d'un récipient de test (100), ledit procédé comprenant les étapes consistant à :
coupler un récipient de référence externe (206) en communication fluidique avec le récipient de test (100) ;
charger le récipient de test (100) et le récipient de référence externe (206), avec un gaz de test, jusqu'à une pression de test initiale prédéterminée pendant une phase de remplissage du test d'étanchéité de fuite ;
surveiller une pression d'au moins un du récipient de test (100) et du récipient de référence externe (206) pour une stabilisation de la pression du test ;
commencer le test d'étanchéité aux fuites du récipient de test (100) quand la pression surveillée est stable au sein d'une plage de pression prédéterminée ; et
surveiller une pression différentielle entre le récipient de test et le récipient de référence externe pendant une phase de test,
**caractérisé en ce que** le procédé comprend en outre la surveillance des valeurs de pression et des valeurs de température à l'intérieur du récipient de test (100) et à l'intérieur du récipient de référence externe (206).

7. Procédé selon la revendication 6, dans lequel le couplage d'un récipient de référence externe (206) en communication fluidique avec le récipient de test (100) comprend le couplage d'un récipient de référence externe (206) en communication fluidique avec le récipient de test (100), un volume (314) du récipient de référence externe (206) étant supérieur à un dixième du volume (102, 304) du récipient de test (100).

8. Procédé selon la revendication 6, dans lequel le couplage d'un récipient de référence externe (206) en communication fluidique avec le récipient de test (100) comprend le couplage d'un récipient de référence externe (206) en communication fluidique avec le récipient de test (100), un volume (314) du récipient de référence externe (206) étant supérieur à un cinquième du volume (102, 304) du récipient de test (100).

9. Procédé selon la revendication 6, dans lequel le couplage d'un récipient de référence externe (206) en communication fluidique avec le récipient de test (100) comprend le couplage d'un récipient de référence externe (206) en communication fluidique avec le récipient de test (100), un volume (314) du récipient de référence externe (206) étant approximativement égal à un volume (102, 304) du récipient de test (100).

10. Procédé selon la revendication 6, dans lequel le couplage d'un récipient de référence externe (206) en communication fluidique avec le récipient de test (100) comprend le couplage d'un récipient de référence externe (206) qui inclut une couche de matériau isolant (324) qui donne au récipient de référence externe (206) une caractéristique d'inertie thermique approximativement égale à une caractéristique d'inertie thermique du récipient de test (100).
